# EUROPEAN PATENT SPECIFICATION

(11) **EP 2 869 375 B1**
(45) Date of publication and mention of the grant of the patent: **15.04.2020**
(21) Application number: 13382441.7
(22) Date of filing: 31.10.2013
(51) Int. Cl.: H01M 6/32

(54) **HYDRAULIC RENEWABLE ENERGY PLANT**
WASSERBETRIEBENE ENERGIEGEWINNUNGSANLAGE
USINE DE PRODUCTION D'ENERGIE A L'EAU

(43) Date of publication of application: 06.05.2015
(73) Proprietor: Rodriguez Escribano, Mario, 28100 Alcobendas (ES); Kowalski, Kazcimierz, 28100 Alcobendas (ES)
(72) Inventor: Rodriguez Escribano, Mario, 28100 Alcobendas (ES); Kowalski, Kazcimierz, 28100 Alcobendas (ES)
(74) Representative: Baños Treceño, Valentín

(56) References cited:
- WO-A2-03/041211
- WO-A2-2004/102691
- WO-A2-2013/090680
- DE-A1- 2 417 571
- RO-A0- 127 064

## Description

### OBJECT OF THE INVENTION

The invention is designed to generate electricity in a renewable energy plant using a redox reaction of galvanic type within specific tanks through a given hydraulic system that introduces, isolates and evacuates water (from sea, river, lake or the like), in a regular and constant way for sufficient time to allow for the reaction within each of the tanks.

The electric power obtained from each tanks is pulled out by means of terminals. Each those tanks in turn are electrically connected together in series forming batteries; these batteries are also joined together in series forming blocks; and these blocks are in turn also joined together in series forming a row, whereby the tension increases in each serial junction. Simultaneously, the row described above is joined in parallel with other rows with the same characteristics as the one referred to, such that the current of the set increases at each parallel junction.

In order to obtain that final result, each one of those tanks have an hydraulic system which is composed by conducts and pipes, certain valves and sensors, in a way that the water is introduced and isolated inside of each tank in a continuous and gradual way, and then is drained or emptied in a continuous and gradual way too.

When the facility is at the land surface there is a cistern, such that the water enters the cistern directly from the sea, river, or other; and it passes from the cistern to the hydraulic system.

### BACKGROUND OF THE INVENTION

Fossil fuels have been the focus of the development of the twentieth century market, and the expansion interests of the powers that existed at that time resulted in the decisions that have drowned the planet in the long-term.

An economic model as the current one, the operation of which depends on continuous growth, also requires an equally increasing energy demand.

Since the sources of fossil and nuclear energy are finite, it is inevitable that at some point the demand will not be able to be covered and the whole system will collapse, unless new methods for obtaining energy such as alternative energies, or as in the case of the present invention, renewable energies, are discovered and developed.

Currently, renewable energies are an important part of the energy used, especially solar, wind and hydraulic energy.
Examples of this are wind and hydraulic turbines or solar panels, which are capable of producing electric power using virtually inexhaustible natural means. But the problem, in turn, of this energy production is that they all depend on the weather conditions prevailing in each case.

With the patent object of this invention electricity will be generated by using a redox reaction of galvanic type within specific tanks containing zinc and copper sheets, by the action of a hydraulic system that introduces, isolates and evacuates water from the sea, river, lake or the like from the aforementioned tanks by means of a series of valves and sensors that make it possible. In this way, the potential difference generated is used within each one of said tanks and electricity is obtained.

So in a lattice of water accumulators where the plates are located, a suitable operating voltage and current is obtained without being conditioned by the weather or the orientation, having also the advantage that it can be built anywhere in the world as the only imperative is that it is near a source of fresh or salt water.

The construction of electrolytic cells in abundance ensures the success of the facility, since facilities with great operating power can be built once the proper operating voltage is reached.

For all these reasons, the hydraulic renewable energy plant of the invention goes one step further in the different types of renewable energy that exist to date, since it takes full advantage of the natural sources.

In this point, the document RO127064 discloses a hydraulic renewable energy plant comprising several tanks in different connection combinations, but that has not a valve control system and/or sensors as defined in the present patent application. Moreover, WO2013090680 discloses a system using sensors, but those sensors are not defined to tanks and/or hydraulic systems and differ from the present patent application ones. So that, none of the cited prior art documents describes a hydraulic energy plant as defined in the description.

The following is a detailed description of the invention that completes these general ideas introduced at this section.

### DESCRIPTION OF THE INVENTION

The invention comprises a certain number of isolated tanks defined as cells, each containing individual blocks of sheets made of copper or made of a metal of similar reducing nature and sheets made of zinc or made of a metal of similar oxidizing nature, both submerged in water. These cells are connected together in series and in parallel in a certain way, increasing the voltage and current of the plant assembly. The water contained in said tanks is constantly renewed by means of a particular hydraulic system.

If the facility is at the land surface there is a cistern, so that the water from the sea, river, or the like enters directly into the cistern and from it passes to the renewable energy plant.

The aforementioned tanks or isolated cells have a certain size depending on the number and size of the plates of copper and zinc, or metals of the same nature, they contain. In order to produce electrical power these plates are submerged in water at all times by means of a defined hydraulic system that will be set forth throughout the specification.

By introducing two metals of different purity such as copper and zinc, and having an electrical conductor means as it is the case of water, an electrochemical process is created, that is, the chemical energy generated from the exchange of electrons between the two metallic elements is transformed into electrical energy.

In this way each of these tanks will form a galvanic cell, and as a result an electrical current is generated from a spontaneous chemical reaction.

These cells are connected in series forming batteries, that is, the connection settings of the terminals of the devices are sequentially joined or connected. Thus, the current passing through all the cells is the same but the voltage of the battery assembly increases.

In turn, these batteries are also joined together in series forming blocks, and these blocks in turn are also joined in series forming a row, whereby the voltage increases in each series junction.

Simultaneously the aforementioned row is joined in parallel with other rows of the same characteristics as the one described, so that the voltage that all the rows joined in parallel have is the same, but the current of the set increases in each of these parallel junctions. As a result of all these associations both in series and in parallel, the energy of the renewable energy plant starts from very small potentials and gradually increases until achieving a considerable energy output.

In order for this power generation to persist in time it is necessary that the water, which is introduced into each of the tanks or cells, is continuously recirculated. Additionally, the water introduced in each one of them has to remain isolated for a sufficient time in order to generate the aforementioned electrical energy.

For this, there is a hydraulic system which causes water (which acts as an electrolyte within the tanks) to gradually regenerate at predetermined continuous intervals. Therefore, since the electric power produced by the so-called redox reaction or copper and zinc spontaneous oxidation-reduction is removed as it is produced, there must be a continuous water renewal which must simultaneously remain isolated for an interval of time (depending on the size of the tank and the number of plates), for the electric power generation to be permanent and continuous.

The hydraulic system through which the water enters and exits the various tanks or cells from which the aforementioned energy is obtained is constituted by a main water inlet pipe, an evacuation main pipe, secondary pipes, auxiliary pipes, solenoid valves, a charging valve and a discharge valve.
The water from the main pipe enters the tank by a secondary pipe which has on its inlet a solenoid valve; this solenoid valve controls the passage of fluid to an accumulator charging valve.

When the charging valve fills a specific volume of water in the tank, that is, when all the zinc and copper plates are completely submerged, the outlet of the charging valve is closed, the aforementioned tank being isolated for a time sufficient for the redox reaction between the plates to occur. The energy obtained from this reaction is transferred to the external electric system or circuit through terminals, which each of the tanks has.

Once the water inside the tank has been isolated for the estimated time, a discharge valve acts through which all of the fluid is discharged towards a secondary outlet pipe having a solenoid valve before its connection to an evacuation main pipe.

Both the charging valve and the discharge valve are synchronized such that the tank is continuously containing water inside; in this way before the end of the water evacuation through the discharge valve, the charging valve fills again the tank achieving continuous recirculation where water is gradually regenerated at continuous and predetermined intervals, generating constant values of electric power.

Inside the tank there are different types of sensors or gauges, as it is the case of failure warning sensors of the valves and a filling shut-off sensor.

Failure warning sensors or gauges detect irregularities of the water level inside the tank, so that when the water level is above the predetermined level, this sensor o gauge sends a warning signal through monitoring indicating that the discharge valve is not working properly; similarly, when the water level inside the tank is below the predetermined level, the sensor sends a warning signal to the corresponding panel indicating that the charging valve is not working properly.

On the other hand, the filling shut-off sensor or gauge is activated or acts when the filling of the tank is performed by an auxiliary pipe.

Before the entry of water into the secondary pipe which directs the fluid to the charging valve, there is an auxiliary filling pipe. This auxiliary filling pipe has a solenoid valve on its inlet. So that when the water is channelled to the charging valve, this solenoid valve is closed. But when the water is channelled or directed through the auxiliary filling pipe, the solenoid valve that is closed is the one located on the inlet of the secondary pipe.

The auxiliary filling pipe is connected directly to the tank or cell so that the tank is filled with water after maintenance or in the first use thereof, such that the tank is full before commissioning or the electric power generation. The filling shut-off sensor cited above is intended to shut-off the water inlet in this initial filling. So that, when the sensor detects that the tank has been filled to a certain height it sends a signal to the solenoid valve which is in the filling auxiliary line and the water inlet is closed.

Also connected directly to the tank there is an auxiliary drain pipe, which on its other end is connected to the evacuation main pipe. This auxiliary pipe has a solenoid valve which remains closed when the discharge valve is operating, and it opens when the solenoid valve of the secondary outlet pipe is closed.
This auxiliary drain pipe is intended to empty the tank for maintenance, such as cleaning the zinc sheets after the process of spontaneous oxidation-reduction of copper and zinc.

A broader understanding of the features of the invention in which the same references as those in the main patent have been maintained to define the parts thereof which are common in this case, assigning complementary references to follow the same identification tone.

In the drawings:
Figure 1 is a perspective representation of one of the tanks which make up the renewable energy plant with water and its corresponding hydraulic system.
Figure 2 is a perspective representation of a number of series junctions of the tanks of Figure 1 forming batteries, joined in parallel by a single general water inlet.
Figure 3 is a schematic representation of the junctions of the tanks of Figure 1 in series and in parallel.

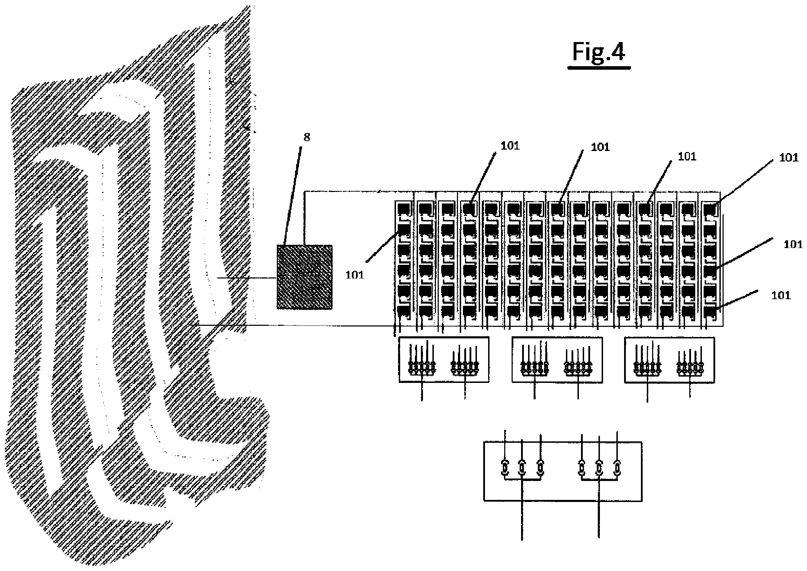

Figure 4 is a schematic representation of the assembly of a renewable energy plant with water according to the distribution of Figure 3.

### DESCRIPTION OF THE DRAWINGS

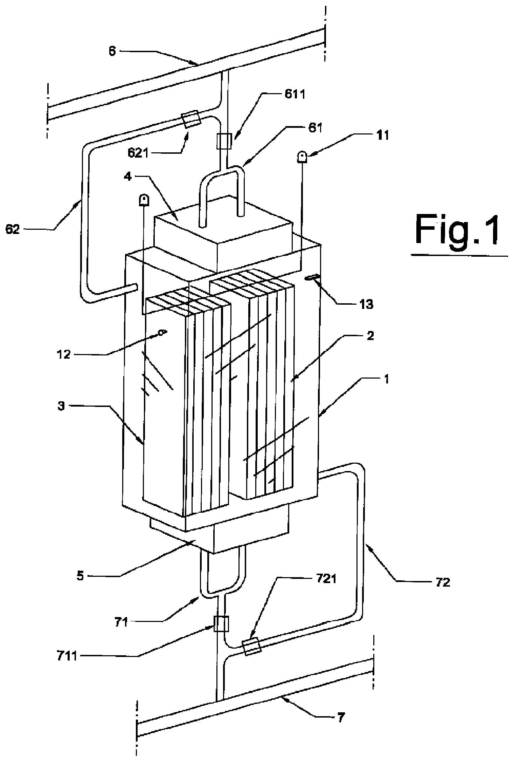

The invention comprises a certain number of isolated tanks (1) (Fig.1) defined as cells, each containing individual blocks of sheets made of copper (2) or made of a metal of similar reducing nature and sheets made of zinc (3) or made of a metal of similar oxidizing nature, both submerged in water. These tanks (1) are connected together in series and in parallel in a particular way, increasing the voltage and current of the plant assembly. The water contained in said tanks (1) is constantly renewed by means of a particular hydraulic system.

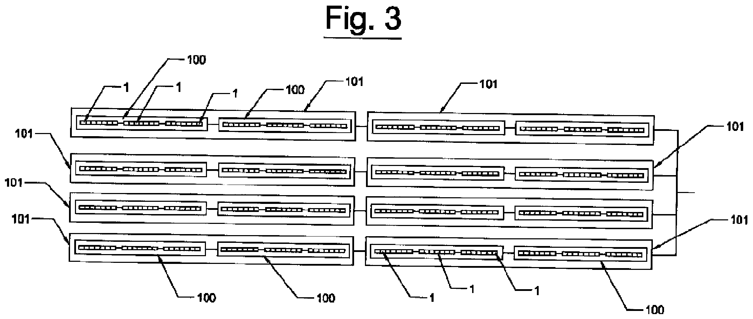

If the facility is at the land surface there is a cistern (8) (Fig.3), so that the water from the sea, river, or the like enters directly into the cistern (8) and from it passes to the renewable energy plant.

The aforementioned tanks (1) or isolated cells have a certain size depending on the number and size of the plates of copper (2) and zinc (3), or metals of the same nature, they contain. In order to produce electrical power, these plates (2 and 3) are submerged in water at all times by means of a defined hydraulic system that will be set forth throughout the specification.

By introducing two metals of different purity such as copper (2) and zinc (3), and having an electrical conductor means as it is the case of water, an electrochemical process is created, that is, the chemical energy generated from the exchange of electrons between the two metallic elements, is transformed into electrical energy.

In this way each of these tanks (1) will form a galvanic cell, and as a result an electrical current is generated from a spontaneous chemical reaction.

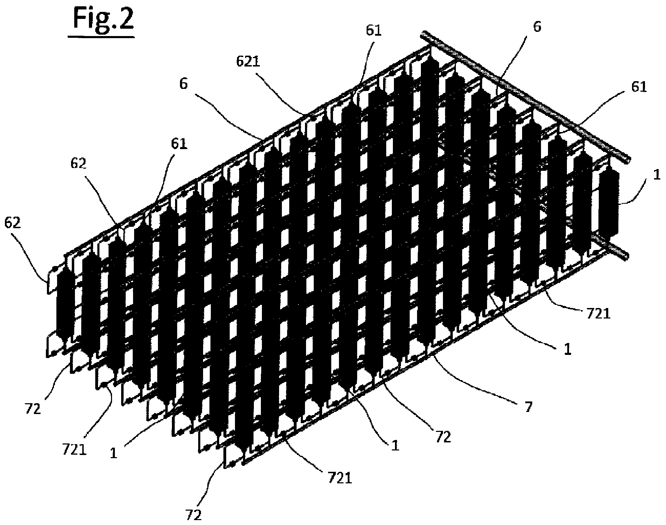

These tanks (1) are connected in series forming batteries (100) (Fig.2), that is, the connection settings of the terminals of the devices are sequentially joined or connected. Thus, the current passing through all the tanks (1) is the same but the voltage of the battery assembly (100) increases.

In turn, these batteries (100) are also joined together in series forming blocks (101), and these blocks (101) in turn are also joined in series forming a row, so that the voltage increases in each series junction.

Simultaneously the aforementioned row is joined in parallel with other rows of the same characteristics as the one described, so that the voltage that all the rows joined in parallel have is the same, but the current of the set increases in each of these parallel junctions. As a result of all these associations, both in series and in parallel, the energy of the renewable energy plant starts from very small potentials and gradually increases until achieving a considerable energy output.

In order for this power generation to persist in time it is necessary that the water, which is introduced into each of the tanks (1) or cells, is continuously recirculated. Additionally, the water introduced in each one of them has to remain isolated for a sufficient time in order to generate the aforementioned electrical energy.

For this, there is a hydraulic system which causes water (which acts as an electrolyte within the tanks (1)) to gradually regenerate at predetermined continuous intervals. Therefore, since the electric power, produced by the so-called redox reaction or copper (2) and zinc (3) (Fig.1) spontaneous oxidation-reduction, is removed as it is produced, there must be a continuous water renewal which must simultaneously remain isolated for an interval of time (depending on the size of the tank (1) and the number of plates (2 and 3)), for the electric power generation to be permanent and continuous.

The hydraulic system through which the water enters and exits the various tanks (1) from which the aforementioned energy is obtained is constituted by a main water inlet pipe (6), an evacuation main pipe (7), secondary pipes (61 and 71), auxiliary pipes (62 and 72), solenoid valves (611, 621, 711 and 721), a charging valve (4) and a discharge valve (5).

Water from the main pipe (6) enters the tank (1) by a secondary pipe (61) which has on its inlet a solenoid valve (611), this solenoid valve (611) controlling the flow of fluid to an accumulator charging valve (4).

When the charging valve (4) fills a specific volume of water in the tank (1), that is, when all the zinc (3) and copper (4) plates are completely submerged, the outlet of the charging valve (4) is closed, leaving the aforementioned tank (1) isolated for a time sufficient for the redox reaction between the plates (2 and 3) to occur. The energy obtained from this reaction is transferred to the external electric system or circuit through terminals (11), which each of the tanks (1) has.
Once the water inside the tank (1) has been isolated for the estimated time, a discharge valve (5) acts through which all of the fluid is discharged towards a secondary outlet pipe (71) having a solenoid valve (711) before the connection to an evacuation main pipe (7).

Both the charging valve (4) and the discharge valve (5) are synchronized such that the tank (1) is continuously containing water inside; in this way before the end of the water evacuation through the discharge valve (5), the charging valve (4) fills again the tank (1) achieving continuous recirculation where water is gradually regenerated at continuous and predetermined intervals, generating constant values of electric power.

Inside the tank (1) there are different types of sensors, as is the case of failure warning sensors (12) or gauges of the valves (4 and 5) and a filling shut-off sensor (13).

The failure warning sensors (12) detect irregularities of the water level inside the tank (1), so that when the water level is above the predetermined level, this failure sensor (12) sends a warning signal through monitoring indicating that the discharge valve (5) is not working properly; similarly when the water level inside the tank (1) is below the predetermined level, the failure sensor (12) sends a warning signal to the corresponding panel indicating that the charging valve is not working properly.

On the other hand, the filling shut-off sensor (13) is activated or acts when the filling of the tank (1) is performed by an auxiliary pipe (62).

Before the entry of water into the secondary pipe (61) which directs the fluid to the charging valve (4), there is an auxiliary filling pipe (62). This auxiliary filling pipe (62) has a solenoid valve (621) on its inlet. So that when water is channelled to the charging valve (4), this solenoid valve (621) is closed. But when the water is channelled or directed through the auxiliary filling pipe (62), the solenoid valve (621) is open and the solenoid valve (611) that is on the secondary pipe (61) is closed.

The auxiliary filling pipe (62) is connected directly to the tank (1) and it fills it with water before commissioning after maintenance or in the first use thereof. The filling shut-off sensor (13) cited above is intended to shut-off the water inlet in this initial filling. So that, when the shut-off sensor (13) detects that the tank is filled to a certain height it sends a signal to the solenoid valve (621) which is in the filling auxiliary line (62) and the water inlet is closed.

Also connected directly to the tank (1) there is an auxiliary drain pipe (72), which on its other end is connected to the evacuation main pipe (7). This auxiliary pipe (72) has a solenoid valve (721) which remains closed when the discharge valve (5) is operating, and it opens when the solenoid valve (711) of the secondary outlet pipe (71) is closed.

This auxiliary drain pipe (72) is intended to empty the tank (1) for maintenance, such as cleaning the zinc (3) sheets after the process of spontaneous oxidation-reduction of copper (2) and zinc (3).

Once properly described the nature of the invention, it is noted for the appropriate purposes, that the same is not limited to the exact details of this disclosure, but otherwise, the changes deemed appropriate will be implemented, provided that they are claimed below.

## Claims

1. Hydraulic renewable energy plant comprising tanks (1) that are connected in series to other tanks (1) forming batteries (100), these batteries (100) being joined together in series forming blocks (101), these blocks (101) in turn being connected sequentially forming a row, which is joined in parallel with other rows equal to that described so that each of these tanks (1) contains copper sheets (2) and zinc sheets (3) which are filled and renewed with water with a continuous volume through a hydraulic system which introduces water thereto from a main pipe (6) through a secondary pipe (61), said copper (2) and zinc (3) sheets being fully submerged and isolated, so that the energy produced by a redox reaction of galvanic type is transmitted to an external electrical circuit via terminals (11), wherein the hydraulic system further comprises a charging valve (4) through which water enters directly to the tank (1), so that when this charging valve (4) is closed for an estimated time, a discharging valve (5) actuates, through which all the fluid is evacuated to a secondary outlet pipe (71), which has a solenoid valve (711) before connecting to a main evacuation pipe (7); and there is also a drain auxiliary pipe (72) connected directly to the tank (1) which connects to the main evacuation pipe (7) previously mentioned, and it has a solenoid valve (721); and it is **characterized in that** both the charging valve (4) and the discharging valve (5) are synchronized moreover, inside the tank (1) there is a failure sensor (12) for the charging and discharge valves (4 and 5) sending a warning signals to a panel when said valves (4 and 5) are not working properly, and a filling shut-off sensor (13) which is activated when the filling of the tank (1) is via an auxiliary pipe (62) having a solenoid valve (621) on its inlet.

## Patentansprüche

1. Hydraulikanlage für erneuerbare Energien, umfassend Behälter (1), die mit anderen Behältern (1) in Reihe verbunden sind, wobei Batterien (100) gebildet werden, wobei diese Batterien (100) miteinander in Reihe geschaltet sind, wobei Blöcke (101) gebildet werden, wobei diese Blöcke (101) wiederum sequenziell verbunden sind, wobei eine Reihe gebildet wird, die parallel mit anderen Reihen geschaltet ist, die der beschriebenen gleichen, sodass jeder dieser Behälter (1) Kupferbleche (2) und Zinkbleche (3) enthält und mit Wasser mit einem kontinuierlichen Volumen durch ein Hydrauliksystem gefüllt und erneuert wird, das Wasser aus einer Hauptleitung (6) durch eine Nebenleitung (61) einführt, wobei die Kupfer- (2) und Zinkbleche (3) vollständig eingetaucht und isoliert sind, sodass die Energie, die durch eine Redoxreaktion galvanischer Art produziert wird, über Klemmen (11) an einen externen elektrischen Schaltkreis übertragen wird, wobei das Hydrauliksystem ferner ein Füllventil (4) umfasst, durch das Wasser direkt in den Behälter (1) eintritt, sodass, wenn dieses Füllventil (4) eine geschätzte Zeit lang geschlossen wird, ein Abgabeventil (5) tätig wird, durch welches das gesamte Fluid in eine zweite Nebenauslassleitung (71) abgeführt wird, die ein Magnetventil (711) aufweist, bevor sie mit einer Hauptabführleitung (7) verbunden wird; und es gibt auch eine direkt mit dem Behälter (1) verbundene Ablaufbehelfsleitung (72), welche mit der zuvor erwähnten Hauptabführleitung (7) verbunden ist, und sie weist auch ein Magnetventil (721) auf; und ist **dadurch gekennzeichnet, dass** sowohl das Füllventil (4) als auch das Abgabeventil (5) aufeinander abgestimmt sind, zudem gibt es innerhalb des Behälters (1) einen Ausfallsensor (12) für das Füll- und das Abgabeventil (4 und 5), der Warnsignale an eine Schalttafel sendet, wenn die Ventile (4 und 5) nicht richtig funktionieren, und einen Füllstoppsensor (13), der aktiviert wird, wenn das Füllen des Behälters (1) über eine Behelfsleitung (62) mit einem Magnetventil (621) an deren Einlass erfolgt.

## Revendications

1. Centrale hydraulique d'énergie renouvelable comprenant des réservoirs (1) qui sont raccordés en série à d'autres réservoirs (1) en formant des batteries (100), ces batteries (100) étant reliées ensemble en séries en formant des blocs (101), ces blocs (101) étant à leur tour raccordés séquentiellement en formant une rangée, qui est reliée en parallèle à d'autres rangées égales à celle décrite de sorte que chacun de ces réservoirs (1) contient des feuilles de cuivre (2) et des feuilles de zinc (3) qui sont remplis et renouvelés avec de l'eau avec un volume continu à travers un système hydraulique qui introduit de l'eau à partir d'un tuyau principal (6) à travers un tuyau secondaire (61), lesdites feuilles de cuivre (2) et de zinc (3) étant entièrement immergées et isolées, de sorte que l'énergie produite par une réaction redox de type galvanique est transmise à un circuit électrique externe via des bornes (11), dans laquelle le système hydraulique comprend en outre une vanne de charge (4) à travers laquelle l'eau pénètre directement dans le réservoir (1), de sorte que lorsque cette vanne de charge (4) est fermée pendant une durée estimée, une vanne de décharge (5) actionne, à travers laquelle tout le fluide est évacué vers un tuyau de sortie secondaire (71), qui a une électrovanne (711) avant de se raccorder à un tuyau d'évacuation principal (7) ; et il y a également un tuyau auxiliaire de vidange (72) directement raccordé au réservoir (1) qui se raccorde au tuyau d'évacuation principal (7) mentionné précédemment, et elle a une électrovanne (721) ; et elle est **caractérisée en ce que** la vanne de charge (4) et la vanne de décharge (5) sont en outre synchronisées, il y a, à l'intérieur du réservoir (1), un capteur de défaillance (12) pour les vannes de charge et de décharge (4 et 5) envoyant des signaux d'avertissement à un panneau lorsque lesdites vannes (4 et 5) ne fonctionnent pas correctement, et un capteur d'arrêt de remplissage (13) qui est activé lorsque le remplissage du réservoir (1) se fait moyennant un tuyau auxiliaire (62) ayant une électrovanne (621) à son entrée.
